# EUROPEAN PATENT APPLICATION

(11) **EP 3 280 176 A1**
(43) Date of publication of application: **07.02.2018**
(21) Application number: 16773007.6
(22) Date of filing: 30.03.2016
(51) Int. Cl.: H04W 28/14, H04M 3/00, H04W 76/02, H04W 88/16

(54) **GATEWAY DEVICE AND BEARER SETTING CONTROL METHOD**

(30) Priority: 31.03.2015 JP 2015074189
(71) Applicant: NTT DOCOMO, Inc., Chiyoda-ku, Tokyo 100-6150 (JP)
(72) Inventor: KOSHIMIZU, Takashi, Tokyo 100-6150 (JP); KUNZMANN, Gerald, 80687 Munich (DE); THAKOLSRI, Srisakul, 80687 Munich (DE)
(74) Representative: Hoffmann Eitle
(86) International application number: PCT/JP2016/060471
(87) International publication number: WO 2016/159126

(57) **Abstract**

In a gateway device that is provided between a radio base station and a terminal device of a mobile communication network, the gateway device includes a storage control unit that temporarily stores data sequentially received from the terminal device in a data storage unit, and then transmits the data stored in the data storage unit to an external device connected to the mobile communication network; and a determination unit that determines a real time property of a service in the external device, and selects a method of setting a bearer to the radio base station based on the real time property.

## Description

### TECHNICAL FIELD

The present invention relates to technology for accommodating terminals used for M2M communication in a mobile communication network, and for performing efficient communication between the terminal and an external device.

### BACKGROUND ART

Recently, study of the M2M (Machine-to-Machine) communication has proceeded such that communication is performed among machines connected to a communication network without intervention of operation by a human, and that desirable control of a machine is automatically executed. For example, in 3GPP, standardization of communication standards related to the M2M has progressed under the name of MTC (Machine Type Communication). Furthermore, there are cases where the M2M communication is referred to as the IoT (Internet of Things), the M2M (Machine to Machine), the USN (Ubiquitous Sensor Network), and so forth.

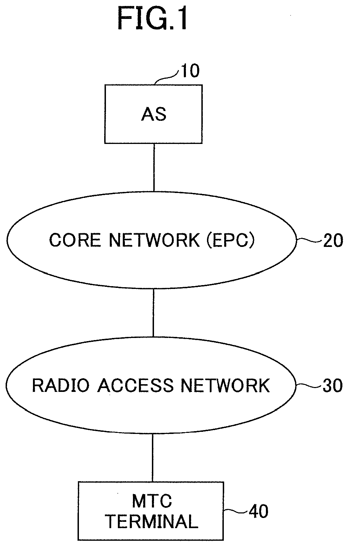

FIG. 1 is a diagram illustrating an example of a network configuration for a case where an MTC terminal 40 is accommodated in a mobile communication network. In the example illustrated in FIG. 1, only one MTC terminal 40 is illustrated; however, this illustrates an example, and many MTC terminals 40 are actually to be connected.

The network illustrated in FIG. 1 includes a radio access network 30; and a core network 20. The radio access network 30 is formed, for example, of a radio base station, such as an eNB (eNodeB). Further, the core network 20 is, for example, an EPC (Evolved Packet Core); and it includes an MME, an S-GW, a P-GW, and so forth. To the core network 20, an AS (application server) 10, which is an external device, is connected through a PDN (packet data network). FIG. 1 illustrates one AS 10; however, a plurality of these may exist.

As one use case of the MTC terminal 40, there is an example where a mobile MTC terminal 40 provided with a sensor function is to be located within a factory. In this case, for example, the MTC terminal 40 periodically reports a sensor measured value to the AS 10.

### Prior Art Document

### [Non-Patent Document]

Non-Patent Document 1: M2M Communications -A System Approach-2012 WILEY, ISBN: 978-1-119-99475-6. David Boswarthck, Omar Elloumi, Oliver Hersent.

### Non-Patent Document 2: 3GPP S2-141678

### SUMMARY OF INVENTION

### [PROBLEM TO BE SOLVED BY THE INVENTION]

It is expected that a great number of the MTC terminals are to be used in the M2M communication, so that the MTC terminal is expected to be a terminal provided with small battery capacity and a limited function so as to reduce the cost. Furthermore, unlike a general mobile terminal used by a human, communication does not occur frequently for the MTC terminal, so that it can be considered to provide a power saving mode (PSM) to reduce the battery energy consumption.

By considering the characteristic of such an MTC terminal, it has been proposed to provide a NW with a proxy including a function for, for example, receiving and responding to an instruction from the AS so as to substitute for the MTC terminal in a sleep mode (Non-Patent Documents 1, 2).

As the above-described sensors to be located, for example, in the factory, in many use cases that are expected for the M2M, it can be considered to accommodate many MTC terminals that mainly perform uplink (UL) communication in a mobile communication network. However, in the above-described related art, no technique has been proposed for efficiently accommodating MTC terminals in a mobile communication network.

The present invention has been achieved in view of the above-described point, and an object is to provide a technique that allows terminal devices that perform communication with an external device connected to a mobile communication network to be efficiently accommodated in the mobile communication network.

### [MEANS FOR SOLVING THE PROBLEM]

According to an embodiment of the present invention, there is provided a gateway device that is provided between a radio base station and a terminal device of a mobile communication network, the gateway device including a storage control unit that temporarily stores data sequentially received from the terminal device in a data storage unit, and then transmits the data stored in the data storage unit to an external device connected to the mobile communication network; and a determination unit that determines a real time property of a service in the external device, and selects a method of setting a bearer to the radio base station based on the real time property.

Further, according to an embodiment of the present invention, there is provided a bearer setting control method to be executed by a gateway device provided between a radio base station and a terminal device of a mobile communication network, wherein the gateway device includes a storage control unit that temporarily stores data sequentially received from the terminal device in a data storage unit, and then transmits the data stored in the data storage unit to an external device connected to the mobile communication network, and wherein the bearer setting control method includes a step of determining a real time property of a service in the external device, and a selection step of selecting a method of setting a bearer to the radio base station based on the real time property.

### [ADVANTAGE OF THE INVENTION]

According to an embodiment of the present invention, a technique is provided that allows terminal devices that perform communication with an external device connected to a mobile communication network to be efficiently accommodated in the mobile communication network.

### BRIEF DESCRIPTION OF DRAWINGS

FIG. 1 is a diagram illustrating a configuration example of a network accommodating an MTC terminal;
FIG. 2 is a configuration diagram of a communication system according to an embodiment of the present invention;
FIG. 3 is a sequence diagram for illustrating a caching/buffering function of an MTC-GW 100 in a first embodiment;
FIG. 4 is a sequence diagram for illustrating a PSM processing function of the MTC-GW 100 in the first embodiment;
FIG. 5 is a sequence diagram for illustrating an interworking process between the MTC-GW 100 and a NW proxy device 200 in the first embodiment;
FIG. 6 is a configuration diagram of the MTC-GW 100 according to the first embodiment;
FIG. 7 is a configuration diagram of the NW proxy device 200 according to the first embodiment;
FIG. 8 is a sequence diagram for illustrating a bearer setting function according to a second embodiment;
FIG. 9 is a diagram for illustrating a SCEF function;
FIG. 10 is a diagram for illustrating a concept of a raw data processing function in the second embodiment;
FIG. 11 is a sequence diagram for illustrating the raw data processing function in the second embodiment;
FIG. 12 is a configuration diagram of the MTC-GW 100 in the second embodiment of the present invention; and
FIG. 13 is a diagram illustrating an example of a HW configuration of the MTC-GW 100.

### EMBODIMENTS OF THE INVENTION

An embodiment of the present invention is described below by referring to the drawings. The embodiment described below is merely an example, and embodiments to which the present invention is applied are not limited to the embodiment below. For example, as a mobile communication network according to the embodiment, a scheme conforming to the LTE is assumed; however, the present invention is not limited to the LTE, and is applicable to another scheme. Furthermore, in the embodiment, an MTC terminal is used as an example of a terminal device; however, a type of the terminal device to which the present invention can be applied is not limited to the MTC terminal.

### (System configuration)

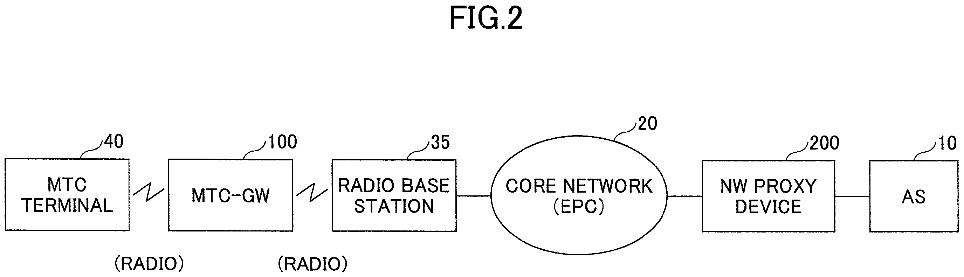

FIG. 2 illustrates a configuration example of a communication system in the embodiments of the present invention (common for first and second embodiments). In the configuration illustrated in FIG. 2, the portions of the radio access network and the core network are the same as those of the configuration illustrated in FIG. 1; however, in FIG. 2, the portion of the radio access network is illustrated as a radio base station 35, so that the connection configuration is more clearly indicated. The radio base station 35 is, for example, an eNB provided with a radio communication function; however, it is not limited to this.

As illustrated in FIG. 2, in the communication system according to the embodiment, an MTC-GW (MTC gateway device) 100 is wirelessly connected to the radio base station 35. Furthermore, a NW (network) proxy device 200 is connected between a core network 20 and an AS (application server) 10.

The MTC-GW 100 can be connected to a plurality of MTC terminals 40 through radio. However, in FIG. 2, one MTC terminal 40 is shown as a representative.

The MTC terminal 40 is provided with, as a basic function, a radio communication function that is the same as that of a mobile phone (UE); however, the function is limited compared to a generic mobile phone. Additionally, a function is provided that is for avoiding energy consumption by entering a power saving mode (the PSM, hereinafter) when there is no transmission nor reception of data.

The MTC-GW 100 is a gateway device that relays communication between the MTC terminal 40 and the radio base station 35. The method of relaying is not particularly limited; however, for example, a scheme can be utilized that performs relaying in an IP layer (layer 3 or 2 transfer scheme).

Furthermore, the MTC-GW 100 establishes a radio connection with the radio base station 35 by using a radio interface protocol, such as the LTE. The radio connection scheme between the MTC-GW 100 and the MTC terminal 40 is not limited to a particular scheme; and, for example, a connection may be established by a radio interface protocol, such as the LTE, or a connection may be established by another wide area radio scheme. Additionally, a connection may be established between the MTC-GW 100 and the MTC terminal 40 by short range radio.

The NW proxy device 200 according to the embodiment is a device provided with a proxy function for executing, as a substitute for the MTC terminal 40, communication with the AS 10. Furthermore, similar to the AS, the NW proxy device 200 is a type of an external device of the core network 20 when it is viewed from the MTC terminal 40. The NW proxy device 200 is, for example, a SCS proxy (Service Capability Server Proxy); however, it is not limited to this, and any proxy device may be used.

The function of the MTC-GW 100 is more specifically described below. The MTC-GW 100 according to the embodiment mainly includes, as characteristic functions, (1) a caching/buffering function, (2) a PSM processing function, (3) a NW proxy device interworking function, (4) a bearer setting method determining function, and (5) a raw data processing function.

In the following, (1) a caching/buffering function, (2) a PSM processing function, and (3) a

NW proxy device interworking function are described as a first embodiment; and (4) a bearer setting method determining function, and (5) a raw data processing function are described as a second embodiment.

Here, related to caching and buffering, caching includes a meaning that data is maintained for re-use to prepare for a request from another device; and buffering includes a meaning that data is accumulated as a step of transmission and reception until data is aggregated and accumulated (for transmission). However, these are the same in

a point that data is temporarily accumulated in a storage unit, so that "buffering" can be used, instead of "caching."

### <(1) Caching/buffering function>

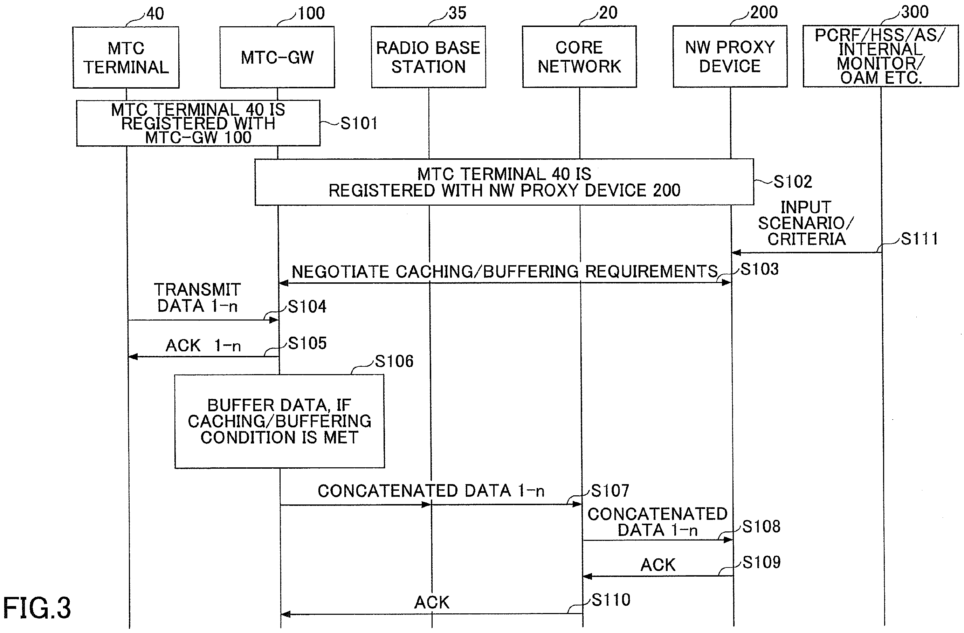

By referring to the sequence diagram illustrated in FIG. 3, an operation example is described that is related to caching/buffering by the MTC-GW 100.

The MTC terminal 40 performs registration with the MTC-GW 100 (S101); and, at the same time, the MTC-GW 100 performs registration of the MTC terminal 40 with the NW proxy device 200 (S102).

Registration of the MTC terminal 40 with the MTC-GW 100 and the NW proxy device 200 is, for example, to store a terminal ID (a terminal identifier) and an address (e.g., IP address/MAC address) of the MTC terminal 40 in a table. By performing such registration, for example, when data including the terminal ID is received, the data can be transmitted to the address of the MTC terminal 40.

Furthermore, in the NW proxy device 200, registration of the MTC-GW 100 has been performed in advance; and, in the registration of above-described step S102, the registration information of the MTC terminal 40 and registration information (e.g., ID, address) of the MTC GW 100, which is the sender of the registration information, are associated and stored in the NW proxy device 200. Consequently, for example, when the MTC terminal 40 is connected to the MTC-GW 100, the NW proxy device 200 can transmit, to the MTC-GW 100 accommodating the MTC terminal 40, data that is received from the AS 10 and that is addressed to the MTC terminal 40.

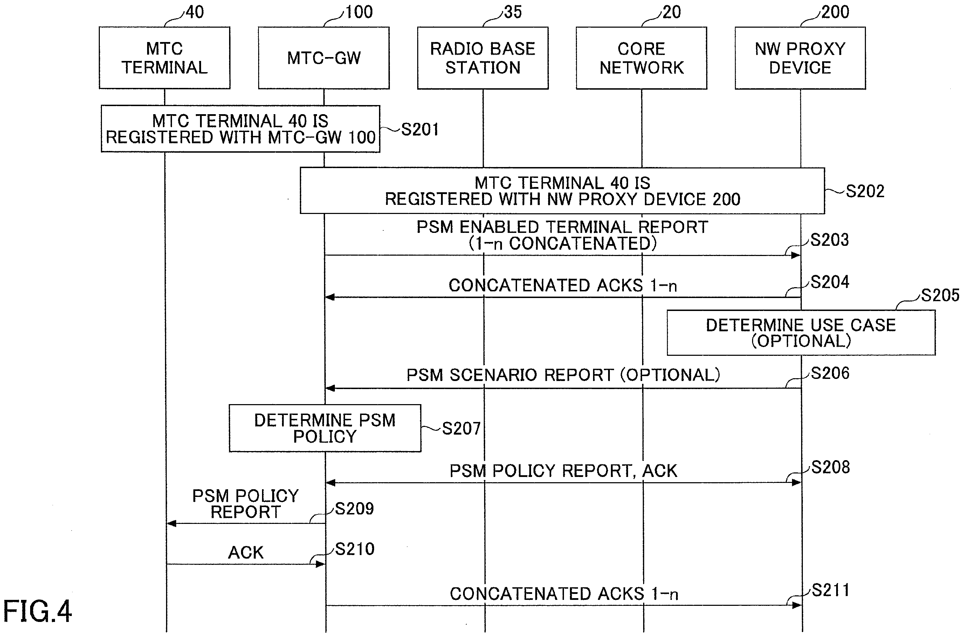

The process related to the above-described registration is basically the same for the sequence diagrams on and after FIG. 4, so that the registration process is briefly described for those on and after FIG. 4.

At step S103 of FIG. 3, the NW proxy device 200 and the MTC-GW 100 negotiate a condition (e.g., criteria, scenario) for executing caching/buffering. The condition may be conditions of the individual MTC terminals accommodated by the MTC-GW 100, or a condition that is common among a plurality of MTC terminals.

As illustrated in FIG. 3, the negotiation can be performed through bidirectional transmission and reception of information. For example, an interaction can be considered such that a certain condition is reported from the NW proxy device 200 to the MTC-GW 100, and that a request for changing the condition is output from the MTC-GW 100 to the NW proxy device 200. Alternatively, there is another interaction such that capability information is reported from the MTC-GW 100 to the NW proxy device 200, and that a condition matching the capability is reported from the NW proxy device 200 to the MTC-GW 100. Furthermore, it may be a unidirectional report from the NW proxy device 200 to the MTC-GW 100, instead of a bidirectional report.

Furthermore, prior to the negotiation at step S103, a scenario/criteria may be input (step

Sill) to the NW proxy device 200 from an entity, such as PCRF/HSS/AS/internal monitor/OAM, which are shown in 300 of FIG. 3.

Note that the condition may be referred to as the "control information." In the following, it is described while assuming that it is a condition for a certain single MTC terminal 40. Furthermore, related to the method of reporting the condition, it may be an operation such that the condition is reported from the AS 10 to the NW proxy device 200, and the NW proxy device 200 transfers the condition; or such that the NW proxy device 200 is provided with a function for determining the condition, and the NW proxy device 200 determines the condition and reports the condition to the MTC-GW 100.

The condition is, for example, a time period to perform buffering (a time period, a time interval for executing data transmission to the NW proxy device 200); a buffer amount that is a trigger for executing data transmission to the NW proxy device 200, and so forth. The latter implies that, when data is buffered by the buffer amount, data transmission to the NW proxy device 200 is to be executed.

Additionally, the condition may be, for example, a condition in a form of a rule or a scenario such that, in a most recent past predetermined time interval (duration) at a time point of determining the condition, if a number of uplink data items to be transmitted from the MTC terminal 40 is less than or equal to a threshold value, buffering is to be performed, and data transmission is performed after a predetermined data amount is buffered; and if the number of the data items is greater than the threshold value, buffering is not to be performed. Note that the condition considers to efficiently utilize resources of a radio access network (RAN), by collectively (by concatenation) transmitting data from the MTC terminal 40, which has a low frequency of transmitting data.

Furthermore, the condition may be such that uplink data to be transmitted from the MTC terminal 40 is always buffered, and data transmission is performed after a predetermined data amount is buffered. The following process assumes such a condition, and buffering is performed up to n data items. Note that the n data items may be considered to be n data items for each of the individual MTC terminals; or n data items to be received by all the multiple MTC terminals.

At step S104 and step S105, data is sequentially transmitted from the MTC terminal 40 to the MTC-GW 100, and an ACK is returned. The MTC-GW 100 performs buffering of n data items from 1 to n, which are transmitted from the MTC terminal 40 (step S106); and, at a moment at which buffering of the n data items is completed, the MTC-GW 100 concatenates (Concatenate) the n data items, and transmits it. Namely, the data items are collectively transmitted. The concatenated data items are transmitted to the NW proxy device 200 through the radio base station and the core network 20 (step S107, S108); and an ACK is returned from the NW proxy device 200 to the MTC-GW 100 (S109, S110). By receiving the ACK, the MTC-GW 100 can confirm that the transmitted concatenated data items have been delivered to the NW proxy device 200 without an error.

### <(2) PSM processing function>

Next, by referring to the sequence diagram illustrated in FIG. 4, an operation example of the PSM process (PSM-handling) by the MTC-GW 100 is described.

The MTC terminal 40 performs registration with the MTC-GW 100 (S201); and, at the same time, the MTC-GW 100 performs registration of the MTC terminal 40 with the NW proxy device 200 (S202). In this operation example, by the registration at step S201, the MTC-GW 100 can maintain, for each of the subordinate MTC terminals, address information for communication and capability information indicating whether the PSM (power saving mode) is supported.

At step S203, the MTC-GW 100 reports, to the NW proxy device 200, the MTC terminal supporting the PSM. Here, for example, an ID of the MTC terminal supporting the PSM is to be reported. For a case where there are multiple IDs (e.g., from 1 to n), these can be concatenated and then transmitted. After receiving the report of step S203, the NW proxy device 200 returns the concatenated ACKs (from 1 to n) to the MTG-GW 100 (step S204).

If it were not for the MTC-GW 100, and the above-described support information were to be reported to the NW proxy device 200, the MTC terminals would be required to report the information to the NW proxy device 200 through the RAN, so that there would be a problem with a network load, increase in the cost of the NW proxy device 200, and so forth; however, in this embodiment, the MTC-GW 100 that can accommodate the multiple MTC terminals collectively (in a concatenated form) reports the above-described support information, so that the above-described problem does not occur.

After step S204, the NW proxy device 200 determines a use case for the PSM. As an example, the NW proxy device 200 recognizes, for example, that a subordinate MTC terminal of the MTC-GW 100 transmitting the report is located at a place at which it is difficult to perform recharging; and determines to cause the PSM control to be performed, which is for avoiding consumption of energy as much as possible.

After that, at step S206, a scenario for the PSM control is reported from the NW proxy device 200 to the MTC-GW 100. The scenario corresponds, for example, to "executing PSM control for avoiding energy consumption as much as possible."

At step S207, the MTC-GW 100 determines policy of the PSM control. The policy is, for example, "entering the PSM if no uplink data is generated in a predetermined period of time," so that, in accordance with the scenario of "executing PSM control for avoiding energy consumption as much as possible," a small value is to be set for the "predetermined period of time." The policy may differ for each of the individual MTC terminals; or may be common among the subordinate MTC terminals.

Note that, besides the above-described scenario, the scenario may directly indicate the "predetermined period of time."

The MTC-GW 100 reports the PSM policy determined at step S207 to the NW proxy device 200; and receives an ACK (step S208). In this manner, the NW proxy device 200 can recognize the PSM policy at the side of the MTC terminal; and, as a result, can always determine whether each MTC terminal is in the PSM. Consequently, the NW proxy device 200 can perform control such that downlink data is not transmitted to an MTC terminal in the PSM, and it is left in a buffer, for example.

At step S209, the MTC-GW 100 reports the determined PSM policy to each of the MTC terminals (the MTC terminal 40 for the case of FIG. 4); receives an ACK from each of the MTC terminals; and transmits concatenated ACKs (for a case of receiving ACKs from multiple MTC terminals) to the NW proxy device 200 (steps S209 - S211). Each of the MTC terminals that receive the PSM policy performs operation of the PSM in accordance with the policy.

### <(3) NW proxy device interworking function>

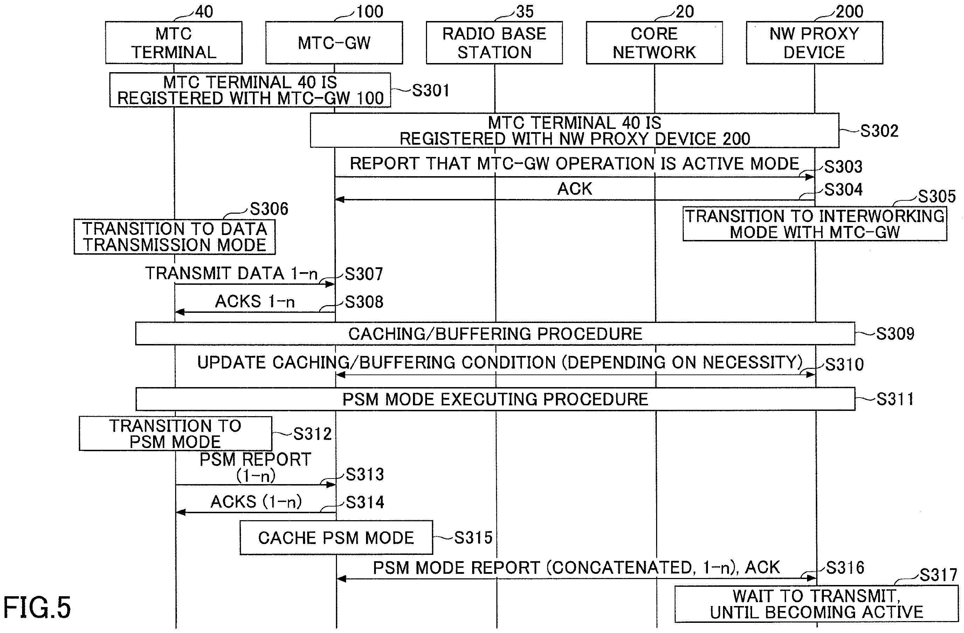

Next, by referring to the sequence diagram illustrated in FIG. 5, an operation example of interworking (Interworking) between the MTC-GW 100 and the NW proxy device 200 is described.

The MTC terminal 40 performs registration with the MTC-GW 100 (step S301); and, at the same time, the MTC-GW 100 performs registration of the MTC terminal 40 with the NW proxy device 200 (step S302).

In this operation example, the MTC-GW 100 supports an active mode for operating as a gateway device between the MTC terminal and the mobile communication network, and an inactive mode for not performing such an operation. Switching of the mode may be performed in accordance with static presetting, for example; or the switching may be dynamically performed based on the number of the subordinate connected MTC terminals. As an example, an operation can be performed such that, upon detecting that a predetermined threshold value or more number of the MTC terminals are connected to the MTC-GW 100 as subordinates, the mode becomes the active mode; and, upon detecting that the number of the connected MTC terminals becomes less than the threshold value, the mode becomes the inactive mode.

The MTC-GW 100 reports, to the NW proxy device 200, that the MTC-GW 100 itself is in the active mode (step S303); and receives an ACK from the NW proxy device 200 (step S304). By the above-described reporting, the NW proxy device 200 can determine that the MTC-GW 100 is in the active mode; and can perform an operation where it is assumed that the MTC-GW 100 is functioning as a gateway device. For example, by determining that the MTC-GW 100 functions as a gateway device, the NW proxy device 200 can make unnecessary an operation for assigning IP addresses to the respective MTC terminals, which are the subordinates of the MTC-GW.

The NW proxy device 200 that confirms that the MTC-GW 100 is in the active mode enters the MTC-GW interworking mode at step S305; and transmits, to the MTC-GW 100, data addressed to the MTC terminal, which is the subordinate of the MTC-GW.

In this example, first, MTC terminal 40 is in the PSM; and, at step S306, state transition occurs from the PSM to the data transmission mode. This corresponds to a case where, for example, a predetermined amount of data is generated, which is to be transmitted.

At steps S307 to S309, buffering, transmission of concatenated data, and so forth are performed, as described in steps S104 to S110, which are illustrated in FIG. 3.

In this operation example, subsequently, the NW proxy device 200 detects that a change in the buffering/caching condition occurs; and reports, to the MTC-GW 100, the updated condition (step S310). As an example of the change, there is a case where there is a request, from the AS 10, indicating that it is desirable to receive data at a higher frequency; and, in response to the request, the buffering period is shortened (to reduce the buffered amount). This corresponds to, for example, a situation where, in response to an increase in demand for real time data communication, the buffering period is shortened so as to expedite the transmission.

At step S311, the PSM process is performed, which is the same as that of steps S203 - S211 of FIG. 4.

At step S312, multiple MTC terminals 40 enter the PSM. Each of the MTC terminals (from 1 to n) reports, to the MTC-GW 100, that it enters the PSM (step S313); and receives an ACK from the MTC-GW 100 (step S314).

At step S315, the MTC-GW 100 stores (caches) the information received at step S313, namely, the information on the MTC terminals entering the PSM (the information indicating which MTC terminals enter the PSM); and, upon detecting that information on a predetermined number of the MTC terminals is stored, the MTC-GW 100 concatenates the information, and reports it to the NW proxy device 200 (step S316).

The MTC terminal 40 that enters the PSM is not able to transmit and receive data. Thus, the NW proxy device 200 does not transmit, to the MC-GW 100, the data addressed to the MCT terminal 40 that enters the PSM. Since it is useless to send data to the MTC terminal 40 that enters the PSM, even if data, which is addressed to the MTC terminal 40 that enters the PSM, is received from the AS 10, the NW proxy device 200 that receives the PSM report at step S316 does not send the data to the MTC-GW 100. However, this is an example; and, depending on the operation policy, even if the data is addressed to the MTC terminal 40 that enters the PSM, the data may be actively sent to the MTC-GW 100. For example, there are a case where the storage capacity of the MTC-GW 100 is large; a case where, when the MTC terminal 40 transitions from the PSM to the data transmission mode, data from the NW proxy device 200 is required to be received as quickly as possible, and so forth.

### <Device configuration example>

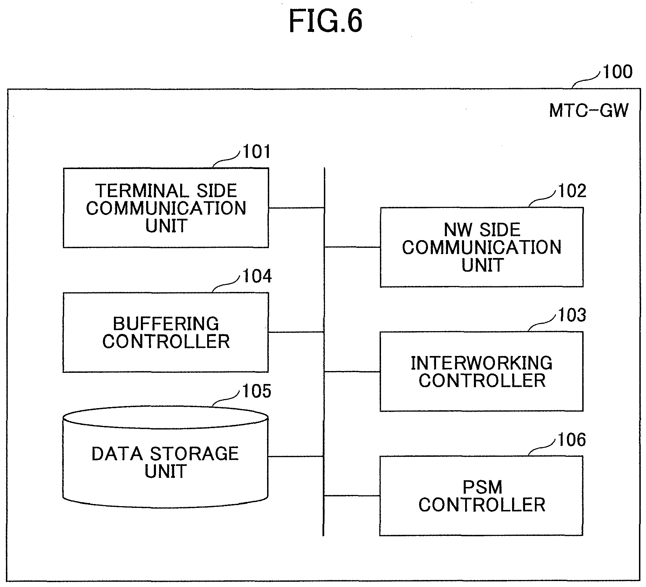

FIG. 6 is a diagram illustrating a configuration example of the MTC-GW 100 according to the first embodiment. As illustrated in FIG. 6, the MTC-GW 100 includes a terminal side communication unit 101; a NW side communication unit 102; an interworking controller 103; a buffering controller 104; a data storage unit 105; and a PSM controller 106. The functional configuration illustrated in FIG. 6 is merely an example. The functional division and names of the functional units may be any division and names, provided that the operation according to the embodiment can be executed.

The terminal side communication unit 101 is a functional unit for executing communication with the MTC terminal 40; and includes a function for registering the MTC terminal 40. The NW side communication unit 102 is a functional unit for executing communication with the mobile communication network side; and includes a function for connecting to/registering with the NW proxy device 200 and another external device (AS), a function for establishing a bearer, a protocol conversion function, and so forth.

The interworking controller 103 includes a function for receiving various types of control information (e.g., the condition and the scenario) from the NW proxy device 200 (which may be the AS 10); for instructing corresponding functional units to perform control based on the received information; and for executing various types of reporting (e.g., operation activation, reporting to the PSM terminal) to the NW proxy device 200 (which may be the AS 10).

The buffering controller 104 performs control of buffering data received from the MTC terminal 40, data received rom the NW proxy device 200, and so forth. For example, the control is to be performed, such as that described at step S106 of FIG. 3. The data storage unit 105 is a functional unit, such as a memory, that forms a buffer (a cache) for temporarily storing data received from the MTC terminal 40, data received from the NW proxy device 200, and so forth.

The PSM controller 106 performs control of the PSM of the MTC terminal 40. For example, the control is performed which is related to the PSM described in steps S206 through S211 of FIG. 4, steps S313 through S316 of FIG. 5, and so forth.

The MTC-GW 100 according to the embodiment can be achieved, for example, by causing a device provided with a plurality of communication interfaces and a configuration of a computer to execute a program describing the details of the processes which are described in the embodiment. Namely, the functions of the MTC-GW 100 can be achieved by executing a program corresponding to the processes performed by the MTC-GW 100 by using hardware resources, such as a CPU (processor), a memory, and a hard disk included in the computer. The above-described program can be stored and distributed by recording it on a computer-readable recording medium (e.g., a portable memory). Additionally, the above-described program can be provided through a network, such as through the Internet, and through an e-mail. Furthermore, each functional unit of the MTC-GW 100 can be achieved by using a hardware circuit.

The point is the same for the second embodiment that the MTC-GW 100 can be achieved by the program or the hardware circuit, as described above.

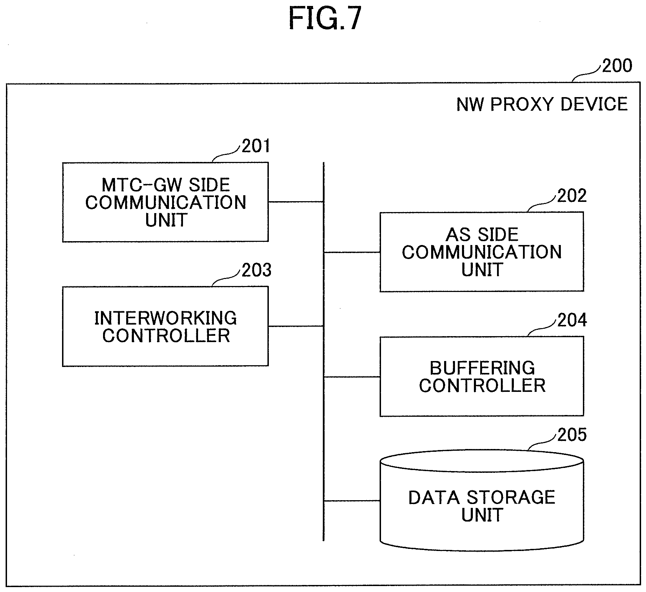

FIG. 7 is a diagram illustrating a configuration example of the NW proxy device 200 in the first embodiment. As illustrated in FIG. 7, the NW proxy device 200 includes an MTC-GW side communication unit 201; an AS side communication unit 202; an interworking controller 203; a buffering controller 204; and a data storage unit 205. The functional configuration illustrated in FIG. 7 is merely an example. The functional division and names of the functional units may be any division and names, provided that the operation according to the embodiment can be executed.

The MTC-GW side communication unit 201 is a functional unit for executing communication with the MTC-GW 100 side. The MTC-GW side communication unit 201 includes a function for registering the MTC terminal and the MTC-GW. Note that FIG. 7 illustrates the configuration which particularly focuses on performing communication with the MTC-GW; and the NW proxy device 200 includes a function for communicating with the MTC terminal 40. The AS side communication unit 202 is a functional unit for executing communication with the AS.

The interworking controller 203 includes a function for transmitting various types of control information (e.g., the condition, the scenario) to the MTC-GW 100; and for receiving various types of reported information from the MTC-GW 100 (e.g., active information, PSM information).

The buffering controller 204 performs control for buffering data received from the AS, data received from the MTC-GW 100, and so forth. The data storage unit 205 is a functional unit, such as a memory, that forms a buffer for temporarily storing data received from the AS, data received from the MTC-GW 100, and so forth.

The NW proxy device 200 according to the embodiment can be achieved, for example, by causing one or more computers to execute a program describing the details of the processes which are described in the embodiment. Namely, the functions of the NW proxy device 200 can be achieved by executing a program corresponding to the processes performed by the NW proxy 200 by using hardware resources, such as a CPU (processor), a memory, and a hard disk included in the computer. The above-described program can be stored and distributed by recording it on a computer-readable recording medium (e.g., a portable memory). Additionally, the above-described program can be provided through a network, such as through the Internet, and through an e-mail.

### <Conclusion of the first embodiment>

As described above, according to the first embodiment, there is provided a gateway device that is provided between a radio base station and a terminal device of a mobile communication network, the gateway device including a reporting unit that reports information indicating that the gateway device is activated to a proxy device connected to the mobile communication network, as an external device; and a storage control unit that temporarily stores data sequentially received from the terminal device in a data storage unit, and, after that, transmits the data stored in the data storage unit to the proxy device.

With the above-described configuration, a terminal device that performs communication with an external device connected to a mobile station can be efficiently accommodated in the mobile communication network. Namely, by the above-described configuration, existence of the activated gateway device can be reported to an external device (proxy device), so that the proxy device can perform interworking operation where it interworks, for example, with a buffering function of the gateway device, and efficient communication (accommodation) can be achieved.

The reporting unit can receive, from the terminal device, information indicating that the terminal device transitions to the power saving mode; and can report the information to the proxy device. With this configuration, the proxy device can determine that the terminal device transitions to the power saving mode.

Upon detecting that the information is received from multiple terminal devices, the reporting unit may collectively report information on the multiple terminals to the proxy device. With this configuration, reporting to the proxy device can be efficiently performed.

The gateway device may include a transmitter for transmitting, to the terminal device, control information for controlling the operation related to the power saving mode of the terminal device. With this configuration, the operation related to the power saving mode can be controlled for the terminal device.

The transmitter may determine the control information to be transmitted to the terminal device base on control information received from the proxy device. With this configuration, control can be achieved that interworks with the proxy device.

The gateway device may include a receiver for receiving, from the proxy device, control information to be utilized by the storage control unit to perform the storing process. With this configuration, control can be achieved that interworks with the proxy device.

The control information is, for example, a period for performing data transmission to the proxy device, or a buffered amount that may be a trigger for performing data transmission to the proxy device. With this configuration, an operation related to buffering can be properly controlled.

### (Second embodiment)

Next, the second embodiment is described. In the second embodiment, details of (4) the bearer setting method determining function, and (5) the raw data processing function are described. Note that each of the devices described below may be provided with, in addition to the function described in the first embodiment, a function according to the second embodiment; or may be provided with a function that is able to implement only the second embodiment.

### <(4) Bearer setting method determining function>

In the following, determination of the bearer setting method to be executed by the MTC-GW 100 is described. Note that the "bearer" is more specifically, a RAB (radio access bearer), which is a logical packet communication channel between the MTC-GW 100 and the radio base station 35. A bearer can be considered to be a bidirectional communication bandwidth. Furthermore, in the embodiment, maximum transmissible bit rates (thickness of the pipe) for the bearer between the MTC-GW 100 and the radio base station 35 in uplink and downlink, respectively, are values that are predetermined depending on the capability of the radio base station 35 and the policy for allocating the frequency band. In order for the MTC-GW 100 to execute data communication through the mobile communication network, it is necessary that the bearer has been established.

As it is described, the MTC-GW 100 is located between the radio base station 35 and the MTC terminal 40; and is provided with a function for buffering data transmitted from the MTC terminal 40, for example. Additionally, there are cases where the MTC terminal 40 does not execute transmission and reception of data, as a result of entering the PSM. Accordingly, for a use case where a real time property is not particularly required for data transmission, it is not required that the bearer is always established between the MTC-GW 100 and the radio base station 35. By establishing a bearer, radio resources, memory resources, and so forth are reserved in the MTC-GW 100 and the radio base station 35, so that to establish a bearer regardless of the fact that transmission and reception of data are sparse and rare implies that resources are to be wastefully consumed.

In order to establish/delete a bearer, transmission and reception of control signals occur in a wireless section and in the core network, so that it is not desirable to frequently establish/delete a bearer even for data without the real time property.

The above-described resource consumption and an amount and so forth of transmission and reception of control signals can be regarded as a cost for setting a bearer. In this embodiment, depending on a type of communication (Type of Communication) to be executed by the MTC terminal 40, the MTC-GW 100 determines a bearer setting method.

Furthermore, especially for a service without real time property, the MTC-GW 100 determines an optimum bearer setting method, so that a total amount of a cost for establishing and deleting a bearer and a cost for continuously setting a bearer is minimized. Here, the "total amount" is the total amount of the costs after the above-described two costs are properly processed so that the sum of these can be obtained. For example, for a case where a number of times of establishing/deleting a bearer in a predetermined unit time is defined to be the "cost for establishing and deleting a bearer," and the time period for continuously setting a bearer in the predetermined unit time is defined to be the "cost for continuously setting a bearer," these may not be simply added, so that a calculation method is defined that is able to calculate the total cost, for example, by adding weights to respective costs.

Furthermore, the "bearer setting method" to be determined is, for example, a time interval for setting a bearer, a buffered amount to be a trigger for setting a bearer (to be a trigger for transmitting data), and so forth.

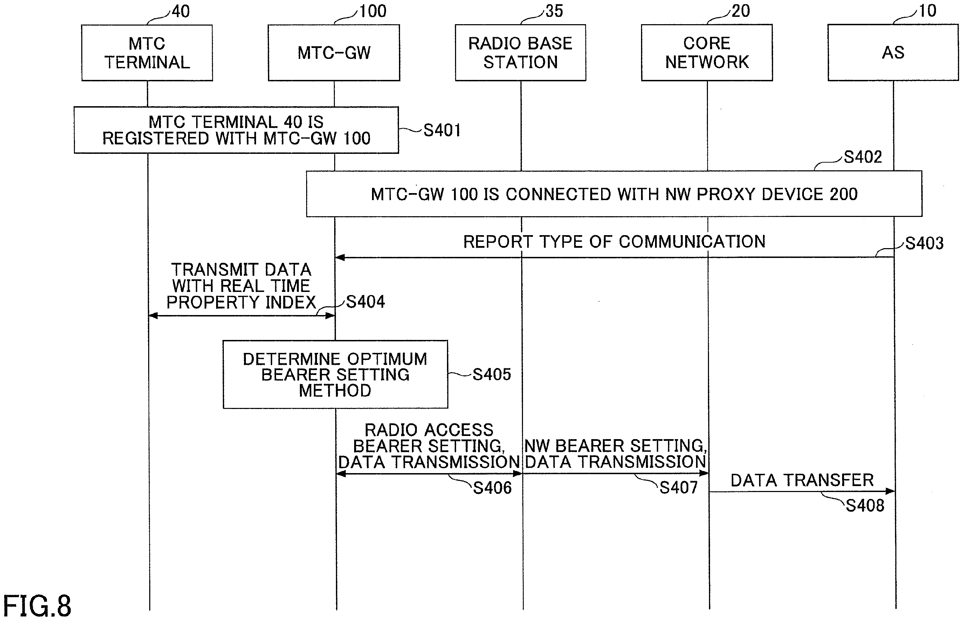

By referring to FIG. 8, the specific details of the process are described. Note that, in the second embodiment, the device outside the core network may be a usual AS 10, or the above-described NW proxy device 200; and FIG. 8 illustrates an example where it is the AS 10.

The MTC terminal 40 performs registration with the MTC-GW 100 (S401). Furthermore, the MTC-GW 100 establishes connection with the AS 10 based on an APN (connection destination point name) corresponding to AS 10 (S402).

The AS 10 (which may be the NW proxy device 200) reports, to the MTC-GW 100, a communication type (communication type) (step S403). The communication type reported here is information representing, for example, time criticality (urgency), time tolerance (time tolerance, how much extent of delay is allowed from occurrence of data until it reaches the AS), and so forth. The above-described time criticality and time tolerance may be collectively referred to as the real time property. The information on the real time property (which is referred to as a real time property index) may be the tolerable delay time itself; or information indicating the extent of the tolerable delay time (large real time property, middle real time property, or small real time property).

Note that, for a case where the MTC-GW 100 can obtain, from the MTC terminal 40, information that is the same as the information obtained at step S403, reporting at step S403 may not be executed. Note that, in this operation example, it is assumed that, for a case where real time property indexes are obtained from multiple MTC terminal 40, a common real time property index is obtained.

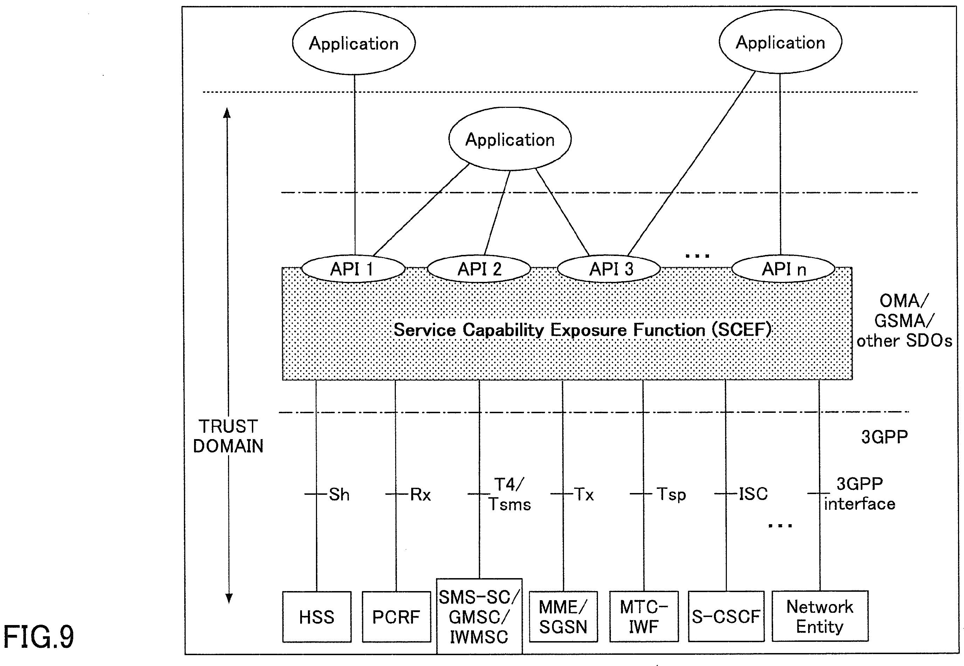

Furthermore, reporting at step S403 may be executed by using a function referred to as SCEF (Service Capability Exposure Function). FIG. 9 illustrates the outline of the SCEF. As illustrated in FIG. 9, the SCEF is a framework for providing 3GPP service functions to a third party.

Referring back to FIG. 8, at step S404, the MTC terminal 40 transmits data together with an index representing the real time property. The index representing the real time property may be obtained by requesting, by the MTC-GW 100, from the MTC terminal 40. Note that, when the AS 10 reports the real time property index at step S403, the index representing the real time property may not be obtained from the MTC terminal 40.

Furthermore, by assuming that the MTC-GW 100 obtains or estimates the real time property based on the APN corresponding to the connection destination (AS 10), neither reporting at step S403 nor reporting of the real time property index from the MTC terminal 40 may be executed.

Alternatively, all of or any two of the following may be executed: reporting of the real time property index at step S403; reporting of the real time property index from the MTC terminal 40; and retrieval/estimate of the real time property from the APN. For a case where multiple real time property indexes are obtained, for example, the real time property index at the safety side (the one with a greater real time property) can be used.

At step S405, the MTC-GW 100 determines the bearer setting method. An example of determining the bearer setting method is described below.

### (a) Bearer setting method determination example 1

In bearer setting method determination example 1, upon detecting that, as the real time property index, the real time property is high, the MTC-GW 100 determines to perform bearer setting such that, unless an interval (time length) for not receiving data from any MTC terminal 40 continues for greater than or equal to a predetermined threshold value (a first threshold value), setting of the bearer is continued. After cutting the bearer, a bearer is established again when data is received from any MTC terminal 40.

The fact that the real time property is high is, for example, a case where a tolerable delay time is less than or equal to a predetermined value; a case where the service estimated from the APN (name) can be determined to be a service requiring real-time communication, and so forth. The determination based on the APN may be made, for example, by storing, in the MTC-GW 100, a table indicating, for each APN, whether it is real-time communication, and by referring to the table.

### (b) Bearer setting method determination example 2

In bearer setting method determination example 2, the MTC-GW 100 detects that, as the real time property index, the real time property is lower than the case of (a). In this case, a determination is made to perform bearer setting such that, unless an interval (time length) for not receiving data from any MTC terminal 40 continues for greater than or equal to another predetermined threshold value (a second threshold value (< the first threshold value)), setting of the bearer is continued. For the case of (b), since the threshold value is less than that of the case of (b), setting/deletion of a bearer is more frequently performed, compared to the case of (b). For the case of (b), since the real time property is lower than the case of (a), it is allowed even if cases increase where data transmission is delayed due to a bearer setting process, and data transmission is performed after buffering it. Here, no instantaneous transmission of data is performed, so that the measured time (e.g., time of receiving the measured data from the terminal, the measured time added to the data and reported from the terminal) may be added to the transmission data, and it may be transmitted to the radio base station side. In this manner, a difference between the transmission time and the measurement time can be eliminated. It can also be applied to the case of (c) described below to add the measured time to the transmit data, and transmit it to the radio base station side.

In case (b), the fact that the real time property is low is, for example, a case where the tolerable delay time is greater than that of case (a), and is less than or equal to a predetermined value.

### (c) Bearer setting method determination example 3

In bearer setting method determination example 3, the MTC-GW 100 detects that, as the real time property index, there is no real time property. The fact that there is no real time property is, for example, a case where tolerable delay time is very long, such as greater than or equal to one day.

In this case, the MTC-GW 100 determines the bearer setting method based on a value of a communication state of data by the MTC terminal 40 up to the time point of the determination, a maximum buffer storage amount of itself, and so forth. The communication state is, for example, data communication interval of each MTC terminal, data rate, and so forth. Furthermore, the data rate of the bearer (size of the radio communication frequency band) is also considered.

Namely, the MTC-GW 100 can determine the bearer setting method in such a manner that the cost for setting and deleting a bearer and the cost for continuously setting a bearer is minimized, based on at least one or more of the data rate of the data transmitted from each MTC terminal 40, the data transmission frequency from each MTC terminal 40, the maximum data rate of the bearer, and the maximum amount of buffering.

For example, for a case where, from the view point of communication fees and so forth, it is desirable, as a policy, to reduce the time for setting the bearer as much as possible (namely, a case where a cost for continuing the bearer is large), the MTC-GW 100 determines a bearer setting method such that data received from the MTC terminal 40 is sequentially buffered, and if the buffered amount reaches the above-described maximum amount of buffering, a bearer is established and the bearer is deleted after all the data in the buffer is transmitted. By this operation, the buffer can be fully utilized, and the cost for continuing a bearer can be reduced.

Furthermore, for example, for a case where it is desirable to reduce a number of times of setting/cutting a bearer as much as possible, from the view point of the policy that it is desirable to reduce an amount of control signals as much as possible (namely, for a case where the cost for setting/cutting a bearer is large), it can be considered that the MTC-GW 100 determines a bearer setting method such that a bearer is continued as long as there is data from the MTC terminal 40.

The above-described policy is, for example, included in the requirement reported at S103 of FIG. 3 (or determined by negotiation).

In the above, (a) through (c) are described; however, these are merely examples. A determination may be made by another method. Furthermore, the bearer setting is performed, for example, by transmitting, by the MTC-GW 100, a service request to the mobile communication network. For the bearer setting method itself, existing technology can be used. In steps S406 through S408, bearer setting and data transmission are performed.

### <Raw data processing function>

Next, processing of raw data (Raw Data) to be performed by the MTC-GW 100 is described.

The MTC-GW 100 may transmit data (raw data) collected from the MTC terminal 40 as it is to the NW; however, for a case where the data required at the AS 10 side (which may be the NW proxy device 200) is not the raw data itself, it can be a waste of radio resources to transmit the raw data to the radio base station side.

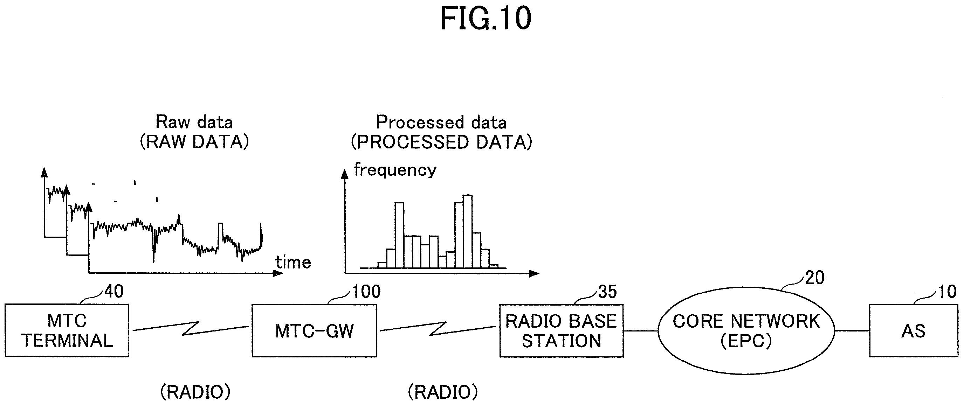

Accordingly, as illustrated in FIG. 10, in this example, the MTC-GW 100 may, for example, statistically process the raw data received from the MTC terminal 40; and may transmit the statistically processed data to the radio base station side.

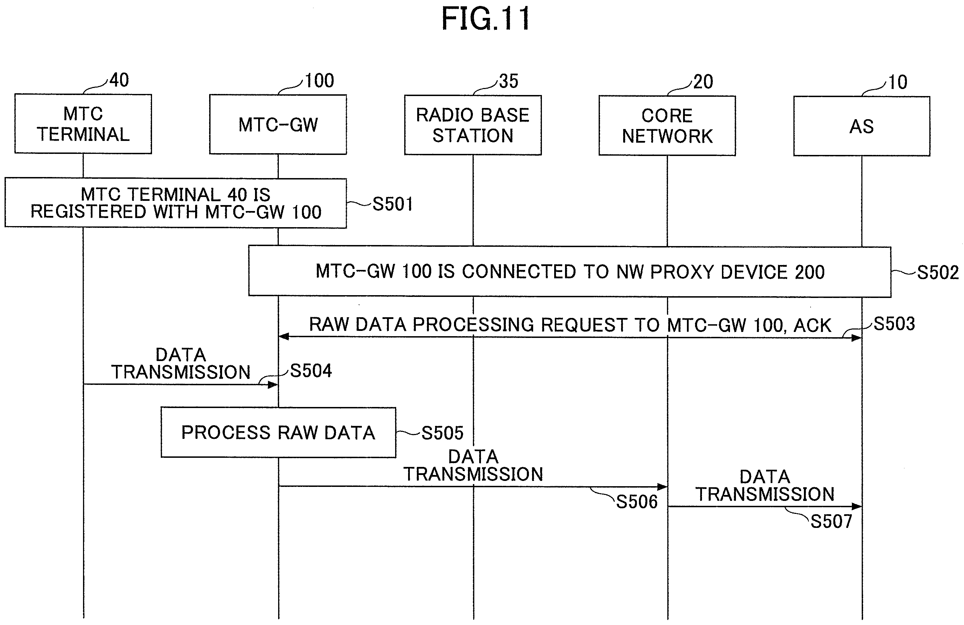

By referring to FIG. 11, an operation example related to processing of the raw data is described. The MTC terminal 40 performs registration with the MTC-GW 100 (S501). The MTC-GW 100 also establishes connection with the AS 10 based on the APN (a connection destination point name) corresponding to the AS 10 (S502).

The AS 10 (which may be the NW proxy device 200) transmits a raw data processing request to the MTC-GW 100; and the MTC-GW 100 returns an ACK (step S503). Here, the raw data processing request includes a data type to be output, a processing method, a processing interval, and so forth. The data type to be output indicates, for example, a format of the output data (e.g., CSV). The processing method indicates, for example, a content of the statistical process (e.g., an average value per unit time). The processing interval indicates a period of outputting a statistical value (e.g., per one hour). Furthermore, the content of the statistical process may be a statistical value of data for each MTC terminal, or a statistical value of all the MTC terminals; and these details are also specified from the AS 10. However, it is merely an example to specify the raw data processing request from the AS 10 and so forth. The raw data processing request may be specified from another terminal, for example.

At step S504, the MTC-GW 100 sequentially receives and buffers data from the MTC terminal 40. When the timing specified by the processing interval has come, the MTC-GW 100 statistically processes the buffered data (step S505); and transmits the processed data to the AS 10 (steps S506, S507).

The data obtained after statistically processing the raw data has, in general, a smaller size compared to the raw data, so that, by the above-described process, the network load, the load on the AS 10 side, and so forth can be reduced.

### <Device configuration example>

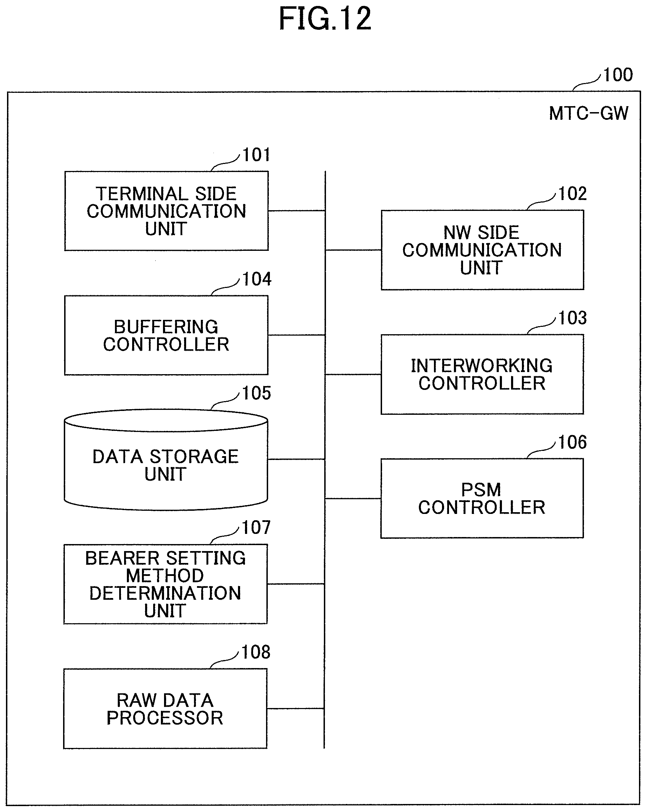

FIG. 12 is a diagram illustrating a configuration example of the MTC-GW 100 according to the second embodiment. As illustrated in FIG. 12, the MTC-GW 100 includes the terminal side communication unit 101; the NW side communication unit 102; the interworking controller 103; the buffering controller 104; the data storage unit 105; the PSM controller 106; a bearer setting method determination unit 107; and a raw data processor 108. The functional configuration illustrated in FIG. 12 is merely an example. The functional division and the names of the functional units may be any functional division and names, provided that the operation according to this embodiment can be executed. Furthermore, FIG. 12 illustrates an example where both the functions related to the first embodiment and the functions related to the second embodiment are included; however, the function that can execute the process in the second embodiment may be included without including the functions described in the first embodiment (excluding the functions required for the second embodiment).

The functional units respectively indicated in 101 through 106 are provided with the functions described in the first embodiment by referring to FIG. 6.

As illustrated in steps S403 through S405 of FIG. 8 and so forth, the bearer setting method determination unit 107 is a functional unit for determining the bearer setting method. As illustrated in steps S503 through S506 of FIG. 11, the raw data processor 108 is a functional unit for processing and transmitting the raw data.

The MTC-GW 100 can be achieved, for example, by a computer configuration including a CPU and a memory, which is achieved by executing a program by the CPU (processor).

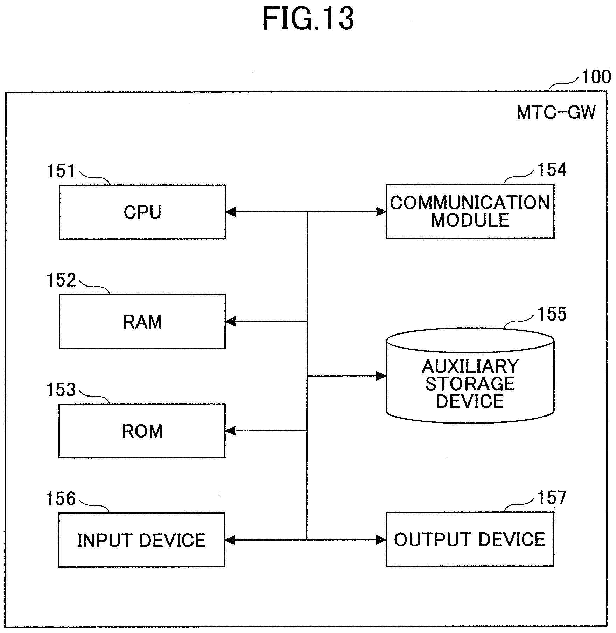

FIG. 13 illustrates an example of a hardware configuration of the MTC-GW 100 for a case where the MTC-GW 100 is formed of a computer, such as that of described above. Note that, with regard to the HW configuration, for the MTC-GW 100 and the NW proxy device 200 according to the first embodiment, the configurations are the same as the configuration illustrated in FIG. 13.

As illustrated in FIG. 13, the MTC-GW 100 includes a CPU 151, a RAM (Random Access Memory) 152; a ROM (Read Only Memory) 153; a communication module 154 for performing communication; an auxiliary storage device 155, such as a hard disk; an input device 156; and an output device 157.

By reading out and executing, by the CPU 151, a program stored in a storage unit, such as the RAM 152, the ROM 153, and the auxiliary storage device 155, operations of respective functions of the MTC-GW 100 are executed. Further, for the process of executing communication, the communication module is used. Furthermore, by the input device 156, for example, inputting of the setting information to the MTC-GW 100 can be performed; and, by the output device 157, for example, outputting of the operating state of the MTC-GW 100 can be performed.

### <Conclusion of the second embodiment>

As described above, by the second embodiment, there is provided a gateway device that is provided between a radio base station and a terminal device of a mobile communication network, the gateway device including a storage control unit that temporary stores data sequentially received from the terminal device in a data storage unit, and then transmits the data stored in the data storage unit to an external device connected to the mobile communication network; and a determination unit that determines a real time property of a service in the external device, and selects a method of setting a bearer to the radio base station based on the real time property.

With the above-described configuration, the terminal device that communicates with the external device connected to the mobile communication network can be efficiently accommodated in the mobile communication network.

The method of setting the bearer that is determined by the determination unit is, for example, a time interval for setting the bearer, or an amount of data temporarily stored in the data storage unit, the amount of data being a trigger for setting the bearer. With this configuration, the method of setting the bearer can be properly determined.

Upon determining that the service is provided with the real time property, the determination unit may determine to continuously set the bearer as long as the data is received from the terminal device, as the method of setting the bearer. With this configuration, the data for which the real time property is required can be quickly transmitted.

Upon determining that the service is not provided with the real time property, the determination unit may determine the method of setting the bearer such that a cost for setting and deleting the bearer and a cost for continuously setting the bearer are minimized. With this configuration, an optimum bearer setting method can be determined.

Upon determining that the service is not provided with the real time property, the determination unit may determine the method of setting the bearer based on any one or more of a data rate of the data transmitted from the terminal device; a frequency of transmitting the data from the terminal device; a maximum data rate of the bearer; and a maximum data amount that is able to be temporarily stored in the data storage unit. With this configuration, the method of setting the bearer can be determined based on a quantitative criterion.

The determination unit determines the real time property of the service based on information received from the external device; determines the real time property of the service based on information received from the terminal device; or determines the real time property of the service based on connection destination information used for connecting to the external device, for example. With this configuration, the real time property can be properly determined.

The gateway device may include a raw data processor that applies a predetermined process to raw data received from the terminal device, and transmits the processed data to the external device. With this configuration unnecessary transmission of raw data can be reduced, and efficient communication is enabled.

The raw data processor may determine the predetermined process based on control information received from the external device. With this configuration, a proper process can be executed, which corresponds to a request from the external device.

The first and second embodiments of the present invention are described above; however the disclosed invention is not limited to the embodiments, and a person ordinarily skilled in the art will appreciate various variations, modifications, alternatives, replacements, and so forth. Specific examples of numerical values are used in the description in order to facilitate understanding of the invention; however, these numerical values are merely an example, and any other appropriate values may be used, except as indicated otherwise. The separations of the items in the above description are not essential to the present invention; and depending on necessity, subject matter described in two or more items may be combined and used, and subject matter described in an item may be applied to subject matter described in another item (provided that they do not contradict). A boundary of a functional unit or a processor in the functional block diagrams may not necessarily correspond to a boundary of a physical component. An operation by a plurality of functional units may be physically executed by a single component, or an operation of a single functional unit may be physically executed by a plurality of components. For the convenience of description, the MTC-GW and the NW proxy device are described by using the functional block diagrams; however, such devices may be implemented in hardware, software, or combinations thereof. Each of the software programs to be executed by the processor included in the MTC-GW in accordance with the embodiment of the present invention and the software programs to be executed by the processor included in the NW proxy device in accordance with the embodiment of the present invention may be stored in any appropriate storage medium, such as a random access memory (RAM), a flash memory, a read-only memory (ROM), an EPROM, an EEPROM, a register, a hard disk drive (HDD), a removable disk, a CD-ROM, a database, a server, and so forth.

The present invention is not limited to the above-described embodiment; and various variations, modifications, alternatives, replacements, and so forth are included in the present invention without departing from the spirit of the present invention.

This patent application is based upon and claims the benefit of priority of Japanese Patent Application No. 2015-074189 filed on March 31, 2015, and the entire contents of Japanese Patent Application No. 2015-074189 are incorporated herein by reference.

### LIST OF REFERENCE SYMBOLS

- 10:: AS
- 20:: core network (EPC)
- 30:: radio access network
- 35:: radio base station
- 40:: MTC terminal
- 100:: MTC-GW
- 35:: Radio base station
- 20:: core network (EPC)
- 200:: NW proxy device
- 101:: terminal side communication unit
- 102:: NW side communication unit
- 103:: interworking controller
- 104:: buffering controller
- 105:: data storage unit
- 106:: PSM controller
- 201:: MTC-GW side communication unit
- 202:: AS side communication unit
- 203:: Interworking controller
- 204:: Buffering controller
- 205:: data storage unit
- 107:: bearer setting method determination unit
- 108:: raw data processor
- 151:: CPU
- 152:: RAM
- 153:: ROM
- 154:: communication module
- 155:: auxiliary storage device
- 156:: input device
- 157:: output device

## Claims

1. A gateway device that is provided between a radio base station and a terminal device of a mobile communication network, the gateway device comprising:
a storage control unit that temporarily stores data sequentially received from the terminal device in a data storage unit, and then transmits the data stored in the data storage unit to an external device connected to the mobile communication network; and
a determination unit that determines a real time property of a service in the external device, and selects a method of setting a bearer to the radio base station based on the real time property.

2. The gateway device according to claim 1, wherein the method of setting the bearer that is determined by the determination unit is a time interval for setting the bearer, or an amount of data temporarily stored in the data storage unit, the amount of data being a trigger for setting the bearer.

3. The gateway device according to claim 1 or 2, wherein, upon determining that the service is provided with the real time property, the determination unit determines to continuously set the bearer as long as the data is received from the terminal device, as the method of setting the bearer.

4. The gateway device according to any one of claims 1 through 3, wherein, upon determining that the service is not provided with the real time property, the determination unit determines the method of setting the bearer such that a cost for setting and deleting the bearer and a cost for continuously setting the bearer are minimized.

5. The gateway device according to claim 3 or 4, wherein, upon determining that the service is not provided with the real time property, the determination unit determines the method of setting the bearer based on any one or more of a data rate of the data transmitted from the terminal device; a frequency of transmitting the data from the terminal device; a maximum data rate of the bearer; and a maximum data amount that is able to be temporarily stored in the data storage unit.

6. The gateway device according to any one of claims 1 through 5, wherein the determination unit determines the real time property of the service based on information received from the external device; determines the real time property of the service based on information received from the terminal device; or determines the real time property of the service based on connection destination information used for connecting to the external device.

7. The gateway device according to any one of claims 1 through 6, further comprising:
a raw data processor that applies a predetermined process to raw data received from the terminal device, and transmits the processed data to the external device.

8. The gateway device according to claim 7, wherein the raw data processor determines the predetermined process based on control information received from the external device.

9. A bearer setting control method to be executed by a gateway device provided between a radio base station and a terminal device of a mobile communication network, wherein
the gateway device includes a storage control unit that temporarily stores data sequentially received from the terminal device in a data storage unit, and then transmits the data stored in the data storage unit to an external device connected to the mobile communication network, and wherein
the bearer setting control method comprises:
a step of determining a real time property of a service in the external device; and
a selection step of selecting a method of setting a bearer to the radio base station based on the real time property.
